# EUROPEAN PATENT APPLICATION

(11) **EP 4 736 663 A1**
(43) Date of publication of application: **06.05.2026**
(21) Application number: 25212108.2
(22) Date of filing: 29.10.2025
(51) Int. Cl.: A23G 9/22, A23G 9/28, A23G 9/48, B65B 35/26, B65B 37/08

(54) **POSITIONING APPARATUS FOR A COMPONENT OF A FOODSTUFF AND METHOD OF USE**

(30) Priority: 29.10.2024 GB 202415924
(71) Applicant: Froneri Ice Cream UK Limited, Northallerton, Yorkshire DL7 9UL (GB)
(72) Inventor: APASA, Ryad, Northallerton, DL7 9UL (GB)
(74) Representative: Wood, Graham

(57) **Abstract**

The invention relates to the provision of apparatus for use in forming a foodstuff and particularly a frozen confectionery and means for locating accurately a member such as a chocolate bar into position into an ice cream portion in a reliable and efficient manner whilst maintaining the quality of the chocolate member. The apparatus includes a source of the said members and movement means to move the members to a manipulator which then serves to move the chocolate member into a required position for insertion into said foodstuff item when the presence of the foodstuff item is detected.

## Description

The invention to which this application relates is to the provision of an apparatus which can be provided to position a component with a product and in particular, although not necessarily exclusively, to align and at least partially insert a component into a foodstuff which is subsequently frozen for consumption. The component to be inserted is typically in elongate form and is most typically a chocolate member to create an ice cream foodstuff commonly referred to as a "99" formed by a wafer cone, ice cream portion and the chocolate member.

Frozen foodstuffs, such as ice creams or ice lollies, are a staple dessert or snack choice for many people and their occurrence is well known. Ice creams in particular are often provided in a wafer cone or tub so that consumers may carry the ice cream and eat it on the move, making these products a popular choice at locations such as parks or on the beach. Ice creams are typically provided in a variety of flavours, and are typically offered with a variety of toppings, such as chocolate, sprinkles or sauces. A popular version includes an elongate chocolate member that is orientated substantially parallel with respect to the longitudinal axis of the ice cream cone or tub and partially inserted into the ice cream portion. Consumers may then remove the chocolate member and eat this separately to or in combination with the ice cream or use the member as a sort of utensil to scoop the ice cream from its container.

Large numbers of ice cream products of this type are known to be produced by automated machinery, wherein the ice cream is dispensed within a wafer cone at a dispensing station; the cone with the ice cream therein, is transported, typically along a conveyor line, to a further dispenser location to receive the chocolate member therein; and is then transported to a packaging station.

Presently, the elongate chocolate member is manually positioned in the ice cream as part of the otherwise automated production line. This creates a problem of high labour costs, increased human contact with the foodstuff and therefore can increase the risk of contamination of the foodstuffs. Furthermore, there is an increased risk of human error when it comes to the placement of the chocolate member into the ice cream. The member may be located at too great or shallow a depth within the ice cream, resulting in the same being buried within the ice cream and inaccessible to the end consumer or protrudes to too great an extent from the ice cream and is damaged by the packaging process. In other circumstances the angle of the insertion may be incorrect and thereby prevent the foodstuff being packaged, and/or the chocolate member may be broken when being inserted. Human error can also adversely affect the repeatability of the placement of the member with the ice cream, and as such the quality of the product may vary between items.

The members to be inserted into the ice cream are often provided loosely in bulk containers, and as such it is often the case that the members have a non-uniform length or profile, due to variances in the output from the manufacturer of the members and/or damage that the members may experience as they are transported to the ice cream facility. The operators that insert the members with the ice cream must identify unsuitable members that are shortened and/or misshaped and discard them without inserting them with the ice cream. This again introduces a factor of human error as the quality of the member is determined by the human operator, rather than by an automated process.

An aim of the present invention is therefore to provide a member positioning apparatus that overcomes the aforementioned problems. In particular, an aim of the present invention is to provide an automated apparatus to position a member with a product in a predetermined position in a repeatable manner.

A further aim of the invention is to provide a means to sense the quantity and/or quality of the members supplied to a positioning apparatus to ensure that a member of a predetermined quality is positioned with each product.

A yet further aim of the invention is to provide a means to align at least one member that is to be supplied to a positioning apparatus in an automated manner, reducing the risk of human contamination of the member and increasing the efficiency of the production line.

In a first aspect of the invention, there is provided apparatus for inserting a foodstuff member at least partially into a portion of a foodstuff product and wherein a manipulator is provided to be movable about an axis of rotation between a first position to receive the said member and a second position to locate the said member into a position for subsequent movement and insertion into said portion of the foodstuff product.

Typically the foodstuff product includes said portion which is formed of ice cream and in one embodiment the member is formed of chocolate.

In one embodiment, the rotatable manipulator includes an opening and recess for the receipt and location of the member therein when in the first position and moving the same to the second position. In one embodiment the respective first and second positions are offset by 90 degrees. In one embodiment, the manipulator is configured such that in the second position, the opening and recess is orientated such that the member is removed from the opening under the effect of gravity.

In one embodiment the apparatus includes sensing means to detect when the member is in position in the recess of the manipulator and, when detected, allow movement of the manipulator. In one embodiment the sensing means is positioned so as to detect through a port in the opening, and typically is an optical sensor, so as to detect the presence of the member in the said opening.

Typically when the member leaves the opening of the manipulator it passes into a chamber which is typically tubular in shape and which is of a length so as to accommodate the member entirely and hence allow, when the member is in the chamber, the manipular to be rotated back to receive the next member.

Typically the member is retained in the chamber, by a gate, typically located at the base of the same, which is closed until the presence of a foodstuff portion at the location of the opening from an insertion guide means is detected and into which portion the member is to be inserted.

In one embodiment, the gate is opened and the end of the member drops into the guide means and the end of the contact member can contact with the surface of said portion. Typically the apparatus includes a moving component which is moveable such that when the said member and foodstuff portion are in the contact position the said member is moved so as to at least partially inserted into the said ice cream portion.

In one embodiment, the moving component is a ram extendable towards the foodstuff portion so as to insert the member into the portion. Typically, the extent to which the ram is extendable is predetermined such as to determine the depth to which the member is inserted. Typically the extent of movement is also repeatable so as to repeatedly and successively insert members into respective foodstuff portions to substantially the same depth.

In one embodiment the ram moves along at least part of the guide means to force the member from the guide means. In one embodiment, the movement of the ram is synchronised with the opening of the gate such that once the member moves our of the chamber when the gate is open and into the guide means, the chamber is closed once the member has left the chamber so as to be available to receive another member from the manipulator and this can be done before the movement means moves along the guide means to insert the member.

In one embodiment, the foodstuff is an ice cream portion of a product located at the opening of the chamber by the provision of a conveyer system for moving cones in which respective ice cream portions are located. Typically, the conveyor system is moveable in a stepwise manner, such that the ice cream portion is stationary when located at the opening of the guide means for the positioning of the member by the apparatus. Typically, the movement of the conveyor system is synchronised with the movement of the manipulator and/or the ram and/or the chamber gate.

In one embodiment the member is provided to the manipulator when in the first position by a supply means. In one embodiment, the supply means includes a movement means to transport the member from a supply of a plurality of members to the manipulator. Typically the movement means includes a conveyor mechanism.

In one embodiment, the supply means includes an alignment means, such that the member is aligned with the manipulator prior to insertion into the manipulator. Typically the alignment means includes guides along the length of the movement means to align the member with the opening of the manipulator in the first position. Typically the rate of movement of the movement means is synchronised with the movement of the manipulator, such that one member is located with the manipulator when the manipulator is in the first position.

In one embodiment the member is an elongate member and may be formed as a biscuit, wafer or other foodstuff but most typically is formed of chocolate.

In one embodiment there is provided a system for detecting the length of the member to be positioned into the ice cream portion of a product, said system including a first sensor orientated to detect the presence of a member as it is transferred by the movement means, and a controller in communication with the first sensor to determine the length of the detected member.

In one embodiment, the first sensor is a distance sensor wherein a reduced detected distance indicates the presence of a member and an increased detected distance indicates the absence of a member.

In one embodiment the speed of the movement means and the duration of the presence of the member detected by the first sensor are input to the controller, such that the controller can calculate the length of the member and those members with a calculated length below and/or above a predetermined acceptable range is flagged by the controller to be removed from the movement means.

In one embodiment the system includes a further sensor located between the first sensor and the positioning apparatus, wherein the further sensor inputs the duration for which a member is detected to the controller, and wherein if the duration exceeds a predetermined threshold, the system signals that the supply of members to the positioning apparatus is to be suspended.

In one embodiment, when the further sensor detects the absence of a member, this is input to the controller and the supply of members is signalled to resume.

In one embodiment, the system includes a further actuating means that is configured to prevent the supply of members to the movement means from the supply when the supply is signalled to be suspended by the controller. Typically, the further actuating means comprises a pneumatic actuator configured to expel any members back into the supply.

In one embodiment and also a further aspect of the invention, there is provided a supply means for the supply of members to a positioning apparatus, including a movement means to transfer the members from a supply to the positioning apparatus and an alignment means for aligning the members with respect to a predetermined orientation with respect to the positioning apparatus.

In one embodiment, the movement means includes a conveyor mechanism, wherein the speed of the conveyor mechanism corresponds to the rate of movement of the positioning apparatus.

In one embodiment the alignment means includes at least one guide member comprising a wall aligned with the positioning apparatus. Typically, the alignment means includes at least one channel along which the member travels.

In one embodiment, the member travels along the length of the channel under the influence of gravity due to a decline of the channel and/or by the member contacting the conveyor mechanism as it travels along the channel.

In one embodiment the member is located within the channel by vibration means. Typically, the vibration which is created encourages the members located thereon towards and into the said channel in sequential manner.

In one embodiment, the vibration means forms the base of a hopper in which a plurality of members are located to be supplied to the positioning apparatus. Typically the side walls of the hopper are sloped such that there is an increased likelihood of a member sliding towards and being located within the channel. In one embodiment said hopper is provided in the form of a frustoconical hopper with an exit at or adjacent to the base though which said members pass in a substantially in-line orientation.

In one embodiment and also a further aspect of the invention, there is illustrated a system for detecting the length of a member to be positioned into an ice cream portion of a product, the system comprising a movement means for a member to be transferred from a supply to a positioning apparatus, a first sensor orientated to detect the presence of a member as it is transferred by the movement means, and a controller in communication with the first sensor to determine the length of the detected member.

In one embodiment, the first sensor is a distance sensor wherein a reduced detected distance indicates the presence of a member and an increased detected distance indicates the absence of a member.

In one embodiment the speed of the movement means and the duration of the presence of the member detected by the first sensor are input to the controller, such that the controller can calculate the length of the member.

In one embodiment, a member with a calculated length below and/or above a predetermined acceptable range is flagged by the controller to be removed from the movement means.

In one embodiment the movement means includes an automated actuating means to remove a flagged member from the movement means. In one embodiment the actuating means includes a pneumatic actuator to expel the member from the movement means. Typically the actuating means is positioned immediately beyond the first sensor.

In one embodiment the system includes a further sensor located between the first sensor and the positioning apparatus, wherein the further sensor inputs the duration for which a member is detected to the controller, and wherein if the duration exceeds a predetermined threshold, the system signals that the supply of members to the positioning apparatus is to be suspended.

In one embodiment, when the further sensor detects the absence of a member, this is input to the controller and the supply of members is signalled to resume.

In one embodiment, the system includes a further actuating means that is configured to prevent the supply of members to the movement means from the supply when the supply is signalled to be suspended by the controller. Typically, the further actuating means comprises a pneumatic actuator configured to expel any members back into the supply.

In a yet further aspect of the invention there is provided an assembly for locating a member into an ice cream portion of a product, the assembly comprising: a positioning apparatus including a manipulator moveable between a first position to receive a member, and a second position to locate the member for subsequent contact with said ice cream portion; a member supply means for the supply of members to the positioning apparatus; and a sensing system for detecting the length of the members supplied to the positioning apparatus by the movement means.

In one embodiment the assembly includes a product movement means, wherein the movement means is positioned such that the positioning apparatus positions a member with products moved by the movement means. Typically the product movement means moves in a stepwise pattern, such that a product is stationary as the positioning apparatus positions a member with the same.

In one embodiment the assembly is controlled by a controller, wherein any or any combination of the speed of the manipulator, the member supply means, and/or the product movement means are controlled by the controller.

Therefore the controller ensures that the movement of the components of the assembly are such that one member is positioned with one product, without damage to the members.

In one embodiment all or parts of the overall system apparatus may be duplicated and operated simultaneously side by side so as to allow the simultaneous positioning of members into ice cream portions and thereby allow the volume of throughput to be increased as required.

In a further aspect of the invention there is provided a method of positioning a member into a portion of a foodstuff product, the method comprising the steps of moving the member into an opening and recess in a manipulator in a first position, rotating said manipulator to a second position in which said opening is aligned with a predetermined and subsequently moving and inserting said member into said portion of the foodstuff product.

In one embodiment the method includes the steps of determining the length of said member at a location upstream of the position of the said manipulator which regard to a direction of movement of the member towards said manipulator and checking whether the length of the member falls within a predetermined acceptable range in which case the member is advanced towards the manipulator or, if not, expelling the member before the same can reach the said manipulator.

In a yet further aspect of the invention, there is provided a foodstuff product including an ice cream portion, said ice cream portion having a member at least partially inserted therein using the apparatus and method as defined.

Specific embodiments of the invention are now described with reference to the accompanying drawings wherein;
Figures 1a-e illustrate a cross-section view of the operation of a member positioning apparatus in accordance with one embodiment of the invention;
Figure 2 illustrates a perspective view of a holder of a member positioning apparatus in accordance with the embodiment of Figures 1a-e;
Figure 3 illustrates a schematic view of a member supply means for supplying members from a supply to a positioning apparatus in accordance with one embodiment of the invention;
Figure 4 illustrates a plan view of a channel of the embodiment illustrated in Figure 3 along which a member travels;
Figure 5 illustrates a perspective section view of a hopper of the supply means of Figure 3;
Figure 6 illustrates a schematic view of a member sensor system in accordance with one embodiment of the invention; and
Figures 7a-c illustrate the process by which a member that is flagged to be removed is removed from the supply means in accordance with one embodiment of the invention.

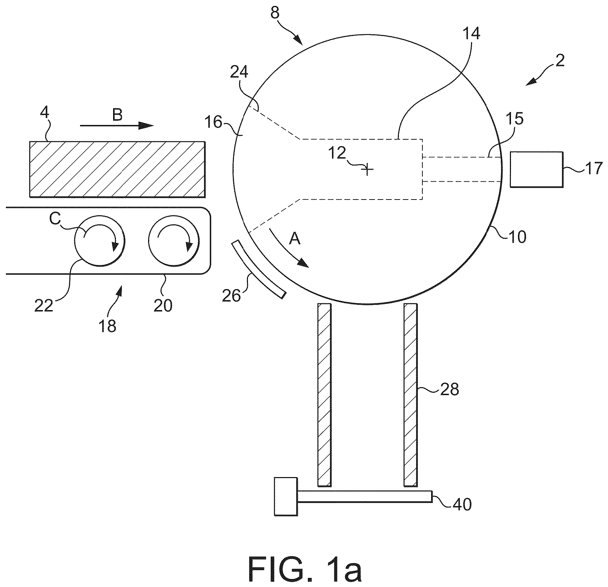

Referring firstly to Figures 1a-e, there is illustrated a positioning apparatus 2 for the positioning of a member 4 with a product 6. In this example, the member 4 is in the form of an elongate chocolate member although it will be appreciated that the member may be in the form of any other member item to be located with a product, such as a biscuit, wafer or the like. Furthermore, in this example, the product 6 with which the member 4 is positioned includes an ice cream portion, although it will be appreciated that the product may be in the form of any other foodstuff into which the member may be inserted to form part of the foodstuff product, such as an ice lolly, yoghurt or any other dessert foodstuff.

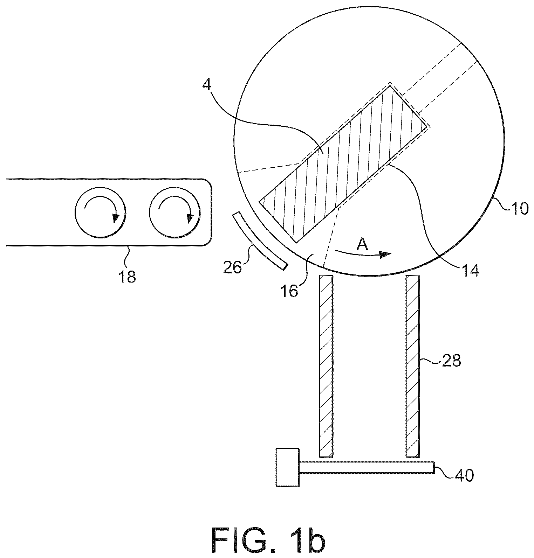

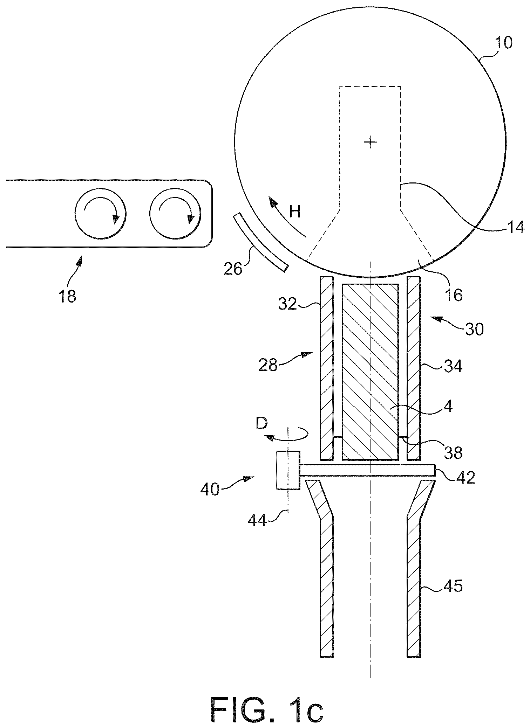

In Figures 1a-c there is illustrated a first part of positioning apparatus 2 which, in this embodiment, includes a manipulator 8, comprising a rotatable component 10 rotatable in direction A about a central axis 12. The rotatable component 10 includes an opening 16 leading to a recess 14 accessible via the opening 16 on the circumference of the rotatable component 10. At the opposing end of the recess 14, a port 15 is provided at which an optical sensor 17 is located so as to detect the presence of a member 4 within the recess and, when detected the rotatable component is driven to rotate 90 degrees from the first position, illustrated in Figure 1a, through the position shown in Figure 1b to the second position as illustrated in Figure 1c.

When in the first position, the rotatable component is orientated with the opening 16 of the recess 14 orientated to be aligned with the direction of movement B of a member 4 which is fed towards the component 10. In this embodiment, the member 4 is introduced through the opening 16 and into the recess 14 by the provision of a movement means 18, in this example a conveyor mechanism comprising a belt 20 driven by a series of rollers 22 rotatable in direction C.

The opening 16 may be chamfered to ensure the member 4 is more easily located within the recess 14 without damaging the same. The recess 14 typically has a cross-section greater than the cross-section of the member 4, whilst ensuring that there is minimal lateral movement of the member within the recess as it is rotated within the rotatable component 10, as illustrated in Figure 1b.

The manipulator 8 is provided with a guard 26 that is formed with a profile complimentary to the profile of the rotatable component 10 and extends along a partial length of the circumference of the rotatable component. The guard 26 is arranged such that the member 4 cannot pass through the opening 16 under the effect of gravity before the rotatable component 10 is positioned in the second position shown in Figure 1c.

When in the second position, illustrated in Figure 1c, the opening 16 of the recess is substantially unobstructed by the guard 26, and the recess 14 is aligned substantially vertically such that the member is deposited from the recess downwards as indicated by arrow 25 from the manipulator 8 into a chamber or holder 28 which, as shown, is substantially tubular. The chamber 28 includes an opening 30 formed by side walls 32 that extend along the chamber body 34 which is substantially complimentary in shape to the profile of the member 4. In this way, the member 4 is aligned with the central axis 36 of the chamber 28.

A lower opening 38 of the chamber 28 is selectively openable by the provision of a moveable gate 40 including an arm 42 pivotable about an axis 44. The gate 40 is shown in a closed position and is typically retained in the closed condition as the member 4 is moved from the first to the second position and into the chamber 28. The length of the chamber 28 is such as to accommodate the whole of the length of the member therein so that the member can entirely leave the recess 14 of the rotatable component 10. As soon as the member is detected as having dropped into the chamber 28 the rotatable component is rotated back 90 degrees to the first position shown in Figure 1a by movement of the same as indicated by arrow H in Figure 1c so as to be in position to receive the next member 4 therein.

The gate 40 is movable to an open position, typically by a motor (not shown), which is controlled by a controller. The controller times the opening of the gate to occur when a product 6 is located beneath the opening 47 of the guide means 45 as shown in Figures 1c-e which show the second part of the positioning apparatus 2. When the product 6 is in the required position, the motor moves the gate 40 to the open position as indicated by arrow D in Figure 1c, and the lower opening 38 becomes unobstructed, allowing the member 4 to fall under gravity through the opening 47 into the guide means 45 and contact the surface of the product 6.

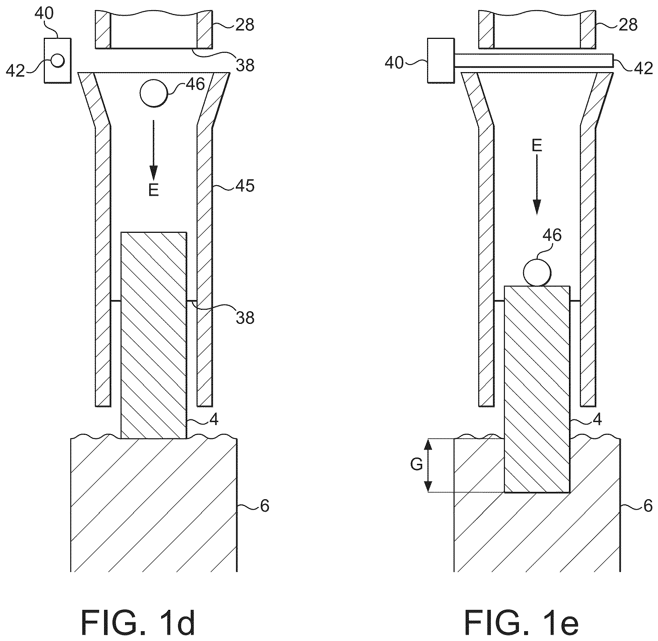

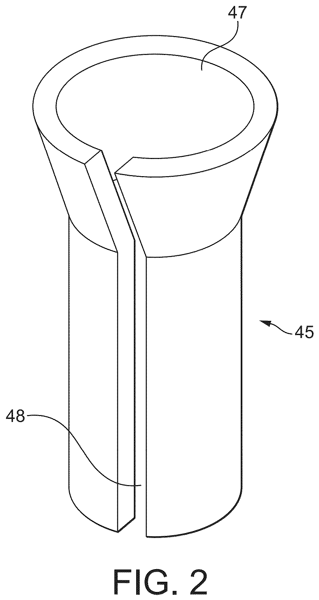

To ensure the member is inserted into the product 6 to a predetermined depth, a component 46 in the form of a ram is lowered towards the member 4, as indicated by arrow E in Figures 1d and e. The ram 46 may be inserted along the length of the guide means 45 or, in this example, the chamber 45 includes a path 48 through which the ram partially extends as illustrated in Figure 2 with, in this embodiment the walls of the guide means adjacent the opening 38 of the chamber being splayed outwardly so as to ease the movement of the member 4 into the guide means.

As illustrated in Figure 1e, the extension of the ram is set so as to determine the depth G to which the member 4 is inserted into the product. The alignment of the member within the guide means 45 is maintained as the ram 46 is lowered due to the provision of the complimentary sidewalls of the guide means 45.

In this way, the alignment of subsequent members 4 and the depth by which the same is inserted into the product 6 is repeatable for successive products 6 which are positioned in sequence under the opening 38 of the guide means 45.

Thus, in one embodiment the insertion sequence for the member into the product in accordance with the invention includes the following steps:
1- The member 4 is fed in a horizontal position into the recess 14 of the rotatable component 10 of the manipulator 8
2- The rotatable component 10 is rotated to rotate the member 90 degrees to the second position in which the member 4 is in a substantially vertical orientation
3- The member 4 falls vertically into the chamber 28 with the gate 40 shut on the bottom to provide a fast return of the rotatable component to the first position and for the member to be in position to be inserted into the product 6 when the same is located underneath.
4- The rotatable component is rotated 90 degrees to return the same to the first position.
5- The gate at the bottom of the chamber 28 is opened when the product 6 is in position to allow the member 4 to fall into the guide means 45 and contact with the surface of the product when detected as being located underneath.
6- The gate 40 is closed and a plunger is inserted into the guide means to insert the member into the product to a desired depth.

In one embodiment the operation of the motor (not shown) that drives the ram 46 is synchronised with the motor that drives the movement of the gate 40, such that the ram 46 is not lowered when the gate is in the closed position. In other examples, the ram 46 and gate 40 are driven by the same means.

The rotatable component 10 of the manipulator rotates back 90 degrees after depositing the member 4 within the chamber and returns to the first position to receive another member to position with another product. If another member is brought into contact with the rotatable component 10 before the rotatable component has returned to the first position, the member contacts the wall of the component as it rotates and remains stationary until it is aligned with the opening 16 of the recess 14.

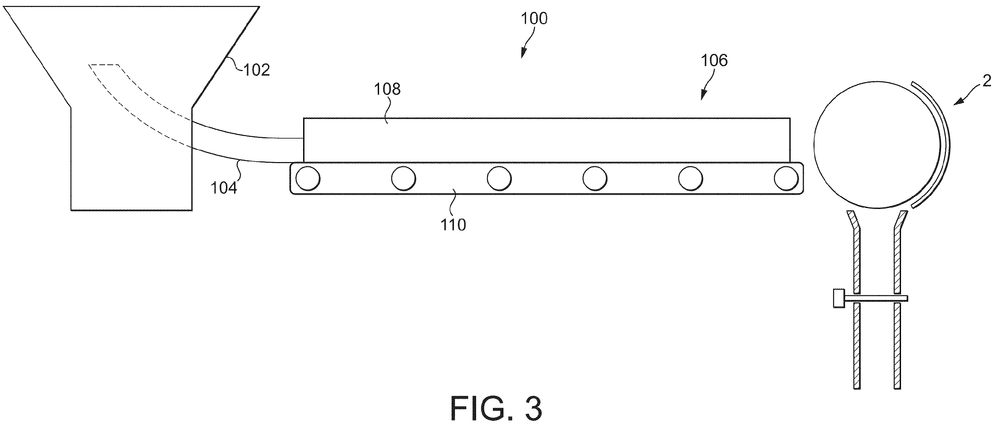

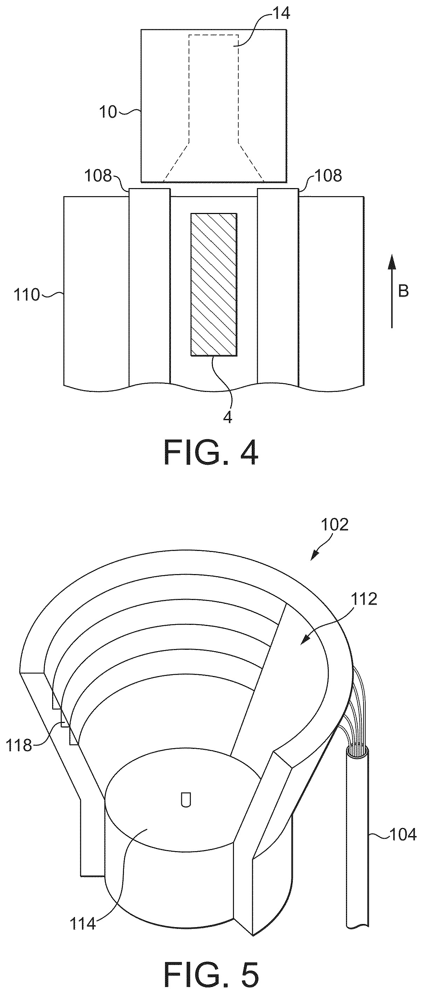

Figure 3 illustrates a supply means 100 to supply a plurality of members to a positioning apparatus 2. The supply means 100 includes a hopper 102 for location of a plurality of members 4 therein. The hopper 102 is in communication with a slide 104 along which members 4 may leave the hopper 102 and be transported, under gravity, to a channel 106. The channel 106 is comprised of two opposed side walls 108 spaced to allow a member to pass therebetween. The base of the channel is formed by a movement means 110, in this example a conveyor mechanism. The conveyor mechanism continually transports the members towards the positioning apparatus 2 as indicated by arrow B. The side walls 108 of the channel are spaced such that a member located therebetween is substantially parallel with the sidewalls, as illustrated in Figure 4, and aligned with an opening of a recess of the positioning apparatus 2 as described in Figures 1a-e.

The hopper 102 is illustrated in Figure 5 and comprises a cavity 112 in which a bulk load of members is located by an operator. Typically, the members 4 are provided in bulk and are randomly orientated. The hopper 102 base is formed of an oscillator 114, in this instance having a dome profile. The oscillator vibrates to bounce and scatter the members, which may have become stuck together. The members are thrown against a slanted side wall 116 of the hopper. Formed within the side wall 116 is at least one groove 118. The groove 118 extends partially along the circumference of the side wall 116 and is declined, such that a member located within the groove is forced down the groove 118 by gravity and encouraged by the vibrations of the hopper 102 induced by the oscillator 114. The groove 118 extends through and exits the hopper and is in communication with the slide 104.

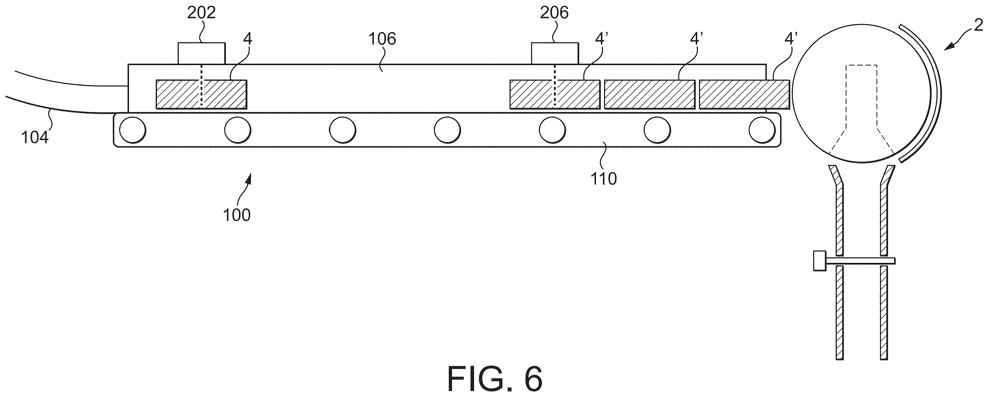

Figure 6 illustrates a system 200 for sensing quality and quantity of the members transported along the supply means 100 to the positioning apparatus 2. The system 200 comprises a first sensor 202 located with respect to the channel 106. The sensor 202 is a proximity sensor, in this example a laser distance sensor, that is orientated to direct into the chamber. When a member 4 passes beneath the sensor 202, the sensor detects a reduced distance. When there is no member beneath the sensor 202, it detects an increased distance.

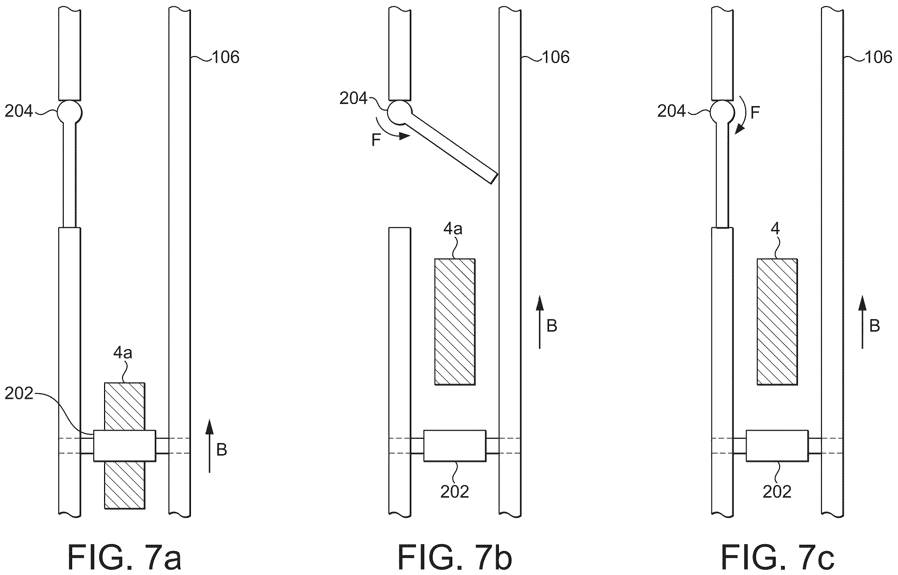

These distance measurements are input directly to a system controller (not shown). The controller logs the duration for which a reduced distance was detected, indicating the duration a member was passing beneath the sensor 202. The speed of the movement means 110 is also input to the controller, and a processor of the controller calculates the length of the member. If the controller determines that the member is outside of a set range, the member is tagged for removal. In this embodiment, the member is automatedly removed, as illustrated in Figures 7a-c.

As illustrated in Figures 7a-c, the members move along the supply system as indicated by arrow B. a moveable gate 204 is formed in a sidewall 108 of the channel 106. The gate 204 is driven by a motor controlled by the controller (not shown). When a member 4a that is of a reduced length so as to fall outside the acceptable range set by the controller passes beneath the sensor 202, the controller tags the member 4a for removal. The controller then activates the gate 204 to cross the path of the member 4a as indicated by arrow F in Figure 7b and diverts the member from the channel. When the sensor 202 detects a member 4 that is of acceptable length, the gate is returned to form part of the sidewall 108, as indicated in Figure 7c.

The diverted member 4a passes from the movement means 110 into a further area where it may be transported away to be disposed of or melted down and reused in another process, such as a sauce.

The system 200 illustrated in Figure 6 comprises a further sensor 206, positioned intermediate the first sensor 202 and the positioning apparatus 2. The further sensor 206 is of the same type as the first sensor 202, that is a proximity sensor orientated into the channel 106 to detect the presence of a member. The outputs of the sensor are similarly input to the controller. If a member 4 is detected beneath the further sensor 206 for a duration greater than a threshold period of time, the controller indicates that the member has become stationary. This is due to a backlog of a plurality of members that are waiting to be received by the positioning apparatus 2. The further sensor 206 is located along the channel 106 such that a backlog of more than one members triggers the controller.

When the controller indicates that a backlog has been detected, the supply of members to the movement means is suspended. Figure 8 illustrates a modified hopper 102 of Figure 3 that includes a series of nozzles 208 positioned at the outlet of the groove 118 and the entrance to the slide 104. The nozzles are supplied by a pneumatic pump (not shown) that is controlled by the controller. When a backlog is detected by sensor 206, the pneumatic pump is activated and air is expelled from the nozzles, sufficient to blow any members 4 travelling along the groove 118 back into the cavity 112 of the hopper 102. In this way, no members are able to pass from the hopper 102 to the movement means 110. When the sensor 206 measures an increased distance, and the controller indicates that no members are present, the backlog is determined to be cleared and the pump is deactivated, allowing members to pass from the hopper 102 to the movement means 110.

The described assembly provides the advantage that a plurality of members may be provided to a system in a bulk and disorganised form, aligned to a predetermined orientation, assessed for suitability by comparing the parameters of the member with a predetermined criteria, discarding any members that do not meet this predetermined criteria, individually aligning the members with a product in which it is to be brought into contact and/or inserted into, and positioning the member with respect to the product at a predetermined position. This assembly is fully automated, and reduces the need for human contact with the members.

## Claims

1. Apparatus for inserting a foodstuff member at least partially into a portion of a foodstuff product and wherein a manipulator is provided to be movable about an axis of rotation between a first position to receive the said member and a second position to locate the said member into a position for subsequent movement and insertion into said portion of the foodstuff product.

2. Apparatus according to claim 1 wherein the manipulator includes an opening and recess for the receipt and location of the member therein when in the first position and during movement of the said member to the second position.

3. Apparatus according to any of the preceding claims wherein the respective first and second positions are angularly offset about the axis of rotation and the manipulator is configured such that in the second position, the opening and recess are orientated such that the member can move through the opening under the effect of gravity.

4. Apparatus according to any of the preceding claims wherein the apparatus includes sensing means to detect when the member is in position in the recess of the manipulator and, when detected, allow movement of the manipulator to move the member to the second position.

5. Apparatus according to any of the preceding claims wherein when in the second position the member leaves the manipulator through said opening and passes into a chamber of a length so as to accommodate the member therein such that the manipulator is free to be rotated away from the said second position.

6. Apparatus according to claim 5 wherein the member is retained in the chamber by a gate located at the base of the same, said gate closed until the presence of said portion at the location of a chamber opening is detected and into which portion the member is to be inserted.

7. Apparatus according to claim 6 wherein when the gate is opened, the end of the member moves into a guide means and the end of the member contacts with the surface of said portion and the apparatus includes a moving component which is movable so as to exert a movement force on said member so as to at least partially insert said member into the said ice cream portion.

8. Apparatus according to claim 7 wherein the movement of the moving component is synchronised with the opening of the gate such that when the member is moved out of the chamber into the guide means, the chamber is closed by returning the gate to the closed position so as to be available to receive another member from the manipulator.

9. Apparatus according to any of the preceding claims wherein a movement means is provided to move the said members successively towards said manipulator and the movement of the movement means is synchronised with the movement of the manipulator and/or the moving component and/or the chamber gate.

10. Apparatus according to claim 9 wherein the movement means includes a conveyor system.

11. Apparatus according to any of the preceding claims wherein the member is provided to the manipulator from a member supply means.

12. Apparatus according to claim 11 wherein said supply means is provided in the form of a frustoconical hopper with an exit at or adjacent to the base though which said members pass in a substantially in-line orientation.

13. Apparatus according to any of the preceding claims wherein the apparatus includes means to determine the length of said member and includes at least one sensing means orientated to detect the presence of a member as it is moved past the sensing means by the movement means, and a controller in communication with the said at least one sensing means to determine the length of the detected member with respect to the speed of movement and duration of time for which the at least one sensing means detects the presence of the said member.

14. A method of positioning a member into a portion of a foodstuff product, the method comprising the steps of moving the member into an opening and recess in a manipulator in a first position, rotating said manipulator to a second position in which said opening is aligned with a predetermined and subsequently moving and inserting said member into said portion of the foodstuff product.

15. A method according to claim 14 wherein the method includes the step of determining the length of said member at a location upstream of the position of the said manipulator which regard to a direction of movement of the member towards said manipulator and checking whether the length of the member falls within a predetermined acceptable range in which case the member is advanced towards the manipulator or, if not, expelling the member before the same can reach the said manipulator.

16. A foodstuff product including an ice cream portion, said ice cream portion having a member at least partially inserted therein using the apparatus as defined in any of claims 1-13 and/or method as defined in any of claims 14-15.
